(19) Europäisches Patentamt
European Patent Office
Office européen des brevets

(11) EP 2 282 274 A1

(12) EUROPEAN PATENT APPLICATION

(43) Date of publication:
09.02.2011 Bulletin 2011/06

(51) Int Cl.:
*G06F 17/30* (2006.01)

(21) Application number: 10151705.0

(22) Date of filing: 26.01.2010

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **23.07.2009 KR 20090067086**

(71) Applicant: **Postech Academy-Industry-Foundation**
**Pohang-si, Gyeongbuk 790-784 (KR)**

(72) Inventor: **Yu, Hwanjo**
**Gyeongbuk (KR)**

(74) Representative: **Schoppe, Fritz**
**Schoppe, Zimmermann, Stöckeler & Zinkler**
**Patentanwälte**
**Postfach 246**
**82043 Pullach bei München (DE)**

(54) **Method of performing database search using relevance feedback and storage medium having program recorded thereon for executing the same**

(57) Provided are methods of performing a database search using relevance feedback, in which a ranking scheme is applied to a database system for efficient database search, and a recording medium having a program recorded thereon for executing the same. The method includes receiving relevance feedback for a first search result, deriving a relevance function based on the received relevance feedback, and applying the first search result to the relevance function and providing a second search result ordered according to a relevance level. Accordingly, an accurate relevance function can be derived from a small amount of feedback by using relevance feedback and a ranking scheme, such that an efficient database search can be achieved without a user reviewing all search results to obtain a desired result.

FIG. 1

**Description**

CLAIM FOR PRIORITY

This application claims priority to Korean Patent Application No. 2009-0067086 filed on July 23, 2009 in the Korean Intellectual Property Office (KIPO), the entire contents of which are hereby incorporated by reference.

BACKGROUND

1. Technical Field

Example embodiments of the present invention relates in general to a database, and more particularly, to methods of performing a database search and recording mediums having a program recorded thereon for executing the same.

2. Related Art

It is difficult to obtain desired data or documents in a general database search, because a user cannot easily represent a specific search using a query interface and keywords and too many search results are provided. For example, in case of a database, PubMed, which is an important information source in biomedicine studies, when a keyword, such as "breast cancer," is entered, two hundred thousand or more documents are returned as a search result. In this case, the user must perform pre-processing such as ordering of the search results with reference to a publication date, an author, an article name, and the like and then inconveniently look for desired articles.

Meanwhile, methods of rearranging search results so that a user can easily obtain a desired result have been studied, such as a method of calculating overall importance of documents through citation information for the documents and using the calculated importance to rank the search results, as seen from Google, a search site. To solve the above problem, a method of utilizing a mechanical training scheme has been considered. However, this method is limited in that a training process and a ranking process are performed offline and a great amount of training data is required to obtain search accuracy above a certain level.

There is another problem in that different users may desire different results for the same keyword query. For example, for the same keyword "breast cancer", one user may desire genetics-related articles while another user may desire articles about the latest cancer surgeries. A ranking scheme based on overall importance does not often respond to a request for information for a specific user, i.e., personalized information.

SUMMARY

Accordingly, example embodiments of the present invention are provided to substantially obviate one or more problems due to limitations and disadvantages of the related art.

Example embodiments of the present invention provide a method of performing a database search using relevance feedback so that a user can obtain a more accurate, desired search result using the feedback.

Example embodiments of the present invention also provide a recording medium having a program of instructions embodied tangibly, recorded thereon, and executable by a digital processing apparatus performing the method of performing a database search using relevance feedback, the recording medium being readable by the digital processing apparatus.

In some example embodiments, a method of performing a database search includes receiving relevance feedback for a first search result, deriving a relevance function based on the received relevance feedback, and applying the first search result to the relevance function and providing a second search result ordered according to a relevance level.

The receiving of the relevance feedback may include receiving a query containing a search condition, providing the first search result corresponding to the query, and receiving the relevance feedback for the first search result.

The deriving of the relevance function may include deriving the relevance function to return a ranking score according to a relevance level of each data included in the first search result using a ranking scheme, the ranking scheme being based on the received relevance feedback.

The ranking scheme may be one of a ranking support vector machine (RankSVM), RankNet and RankBoost.

The deriving of the relevance function may be performed as a form of a SQL syntax that uses a training table containing training data as an input factor and a model table containing trained result data as an output factor.

The training table may include an instance identifier attribute, a feature vector attribute describing an instance, and a ranking label attribute of the instance.

At least one of the deriving of the relevance function and the applying of the first search result may be performed as a form of separate independent query language instructions or instructions integrated into an existing query language on a database system.

The applying of the first search result may be performed as a form of a SQL syntax that uses a model table containing trained result data and a test table containing data to be predicted as input factors and a result table containing result data obtained by giving a ranking score to the data to be predicted as an output factor.

The test table may include an instance identifier attribute and a feature vector attribute describing an instance, and the result table may include the instance identifier attribute and a ranking score attribute of an instance.

The relevance feedback may be one of multi-level relevance feedback for the first search result and relative relevance ordering feedback for the first search result.

The relevance function may be stored as a table on a database system.

In other example embodiments, a recording medium has a program of instructions embodied tangibly, recorded thereon and executable by a digital processing apparatus performing a method of performing a database search, the recording medium being readable by the digital processing apparatus. The program performs receiving relevance feedback for a first search result, deriving a relevance function based on the received relevance feedback, and applying the first search result to the relevance function and providing a second search result ordered according to a relevance level.

BRIEF DESCRIPTION OF THE DRAWINGS

Example embodiments of the present invention will become more apparent by describing in detail example embodiments of the present invention with reference to the accompanying drawings, in which:

FIGS. 1 and 2 are conceptual diagrams for explaining a method of performing a database search using relevance feedback according to an example embodiment of the present invention;

FIGS. 3 and 4 are flowcharts of a method of performing a database search using relevance feedback according to an example embodiment of the present invention;

FIG. 5 illustrates tables used in the method of performing a database search using relevance feedback according to an example embodiment of the present invention;

FIG. 6 is a graph showing an efficiency experiment result in a training process of a method of performing a database search using relevance feedback according to an example embodiment of the present invention;

FIG. 7 is a graph showing an efficiency experiment result in a prediction process of a method of performing a database search using relevance feedback according to an example embodiment of the present invention; and

FIG. 8 is a graph showing an accuracy experiment result of a method of performing a database search using relevance feedback according to an example embodiment of the present invention.

DESCRIPTION OF EXAMPLE EMBODIMENTS

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should also be noted that in some alternative implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

A data mining scheme includes analyzing data using association rule mining, classification and prediction, clustering, and text and web mining and extracting useful information from the data. In this case, a ranking scheme is used to rank given data according to a predetermined criterion.

However, it is difficult for the data mining scheme to be performed while interworking with an existing database management system, such as a relational database management system (RDBMS), because ongoing studies have been based on an algorithm used in fields of machine learning, information retrieval and the like. Accordingly, a ranking algorithm has been developed separately from existing RDBMS, or the like and thus does not interwork with existing RDBMS such as MySQL, Oracle, MS-SQL, and the like.

To overcome this limitation, an example embodiment of the present invention provides a more accurate, personalized search result by integrating a ranking algorithm into a database system and executing the ranking algorithm. The ranking algorithm may be executed as a form of a solely executed query language or a form integrated into existing query language syntax.

Examples of the ranking scheme include a ranking support vector machine (RankSVM), RankNet, Rank Boost, and the like. A ranking scheme and the ranking algorithm used in an example embodiment of the present invention are not limited to a specific algorithm and all types of algorithms for ranking given data according to a predetermined criterion may be used. Hereinafter, a description will be given by way of example in connection with the RankSVM.

A support vector machine (SVM) is a scheme of converting training data into a high-dimensional vector through nonlinear mapping, and obtaining a linear separable hyperplane for optimally separating the training data according to a predetermined criterion on a high dimension. Since the SVM requires a long training time but can accurately model a complex nonlinear decision-making area, the SVM is widely used for classification.

RankSVM is a modified version suitable for a ranking issue, of SVM intended for classification, in which training is performed to optimize or minimize an objective function defined based on a distance between data pairs. RankSVM includes a model training process and a prediction process. In the model training process, a weight vector is determined so that the distance between the data pairs is optimized or minimized for the objective function. In the prediction process, a score of each data using a trained model is obtained for ranking. Specifically, a preference function or a relevance function for scoring all pieces of data is derived from the training data, and the score of each data is calculated based on the derived function to perform a ranking task.

"A is preferred to B." is indicated by "A>B". Training data R of RankSVM may be represented by Equation 1:

$$\text{Equation 1}$$

$$R = \{(\vec{x}_1, y_1), ..., (\vec{x}_m, y_m)\}$$

where $y_i$ is the ranking of $x_1$, that is, $y_i < y_j$ if $\vec{x}_i > \vec{x}_j$

For a given training data set R, RankSVM calculates a ranking scoring function F satisfying $F(x_i)>(x_j)$ when $x_i>x_j$ in the training data vector. For example, F may be a linear ranking function defined by Equation 2:

$$\text{Equation 2}$$

$$\forall \{(\vec{x}_i, \vec{x}_j) : y_i < y_j \in R\}$$
$$: F(\vec{x}_i) > F(\vec{x}_j) \Leftrightarrow \vec{w} \cdot \vec{x}_i > \vec{w} \cdot \vec{x}_j$$

Next, F conforming to the training data set R is trained to be generalized to predict even for data other than the training data set R. This corresponds to a process of obtaining a weight vector w satisfying Equation 2. Specifically, RankSVM obtains a weight vector for minimizing $L_1$ defined by Equation 3:

<u>Equation 3</u>

$$L_1(\vec{w}, \xi_{ij}) = \frac{1}{2}\vec{w} \cdot \vec{w} + C\sum \xi_{ij}$$

for $\forall\{(\vec{x_i}, \vec{x_j}): y_i < y_j \in R\}: \vec{w} \cdot \vec{x_i} \geq \vec{w} \cdot \vec{x_j} + 1 - \xi_{ij}$
and $\forall(i, j) : \xi_{ij} \geq 0$

where w denotes a weight vector, $\xi_{ij}$ denotes a slack variable for measuring a misclassification level, C denotes a user parameter for determining trade-off between a soft margin size and an error size upon training, and $x_i$ and $x_j$ are training data vectors. Since details of RankSVM can be easily understood from known related techniques and technical documents, a description thereof will be omitted (Burges, C.J.C.: A tutorial on support vector machines for pattern recognition. Data Mining and Knowledge Discovery 2, 121.167 (1998), Hastie, T., Tibshirani, R.: Classification by pairwise coupling. In: Advances in Neural Information Processing Systems (1998), J.H.Friedman: Another approach to polychotomous classification. Tech. rep., Standford University, Department of Statistics, 10:1895-1924 (1998)).

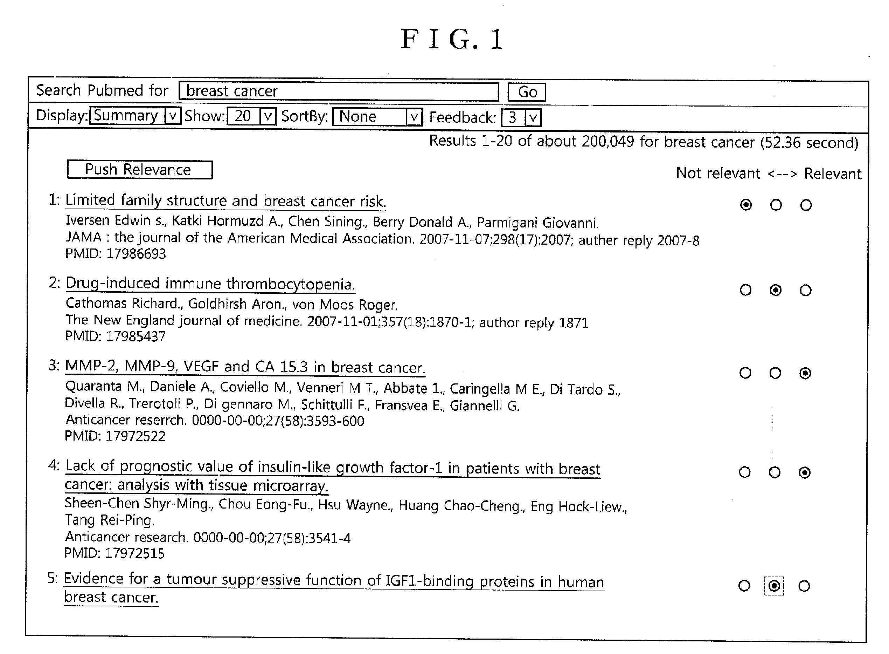

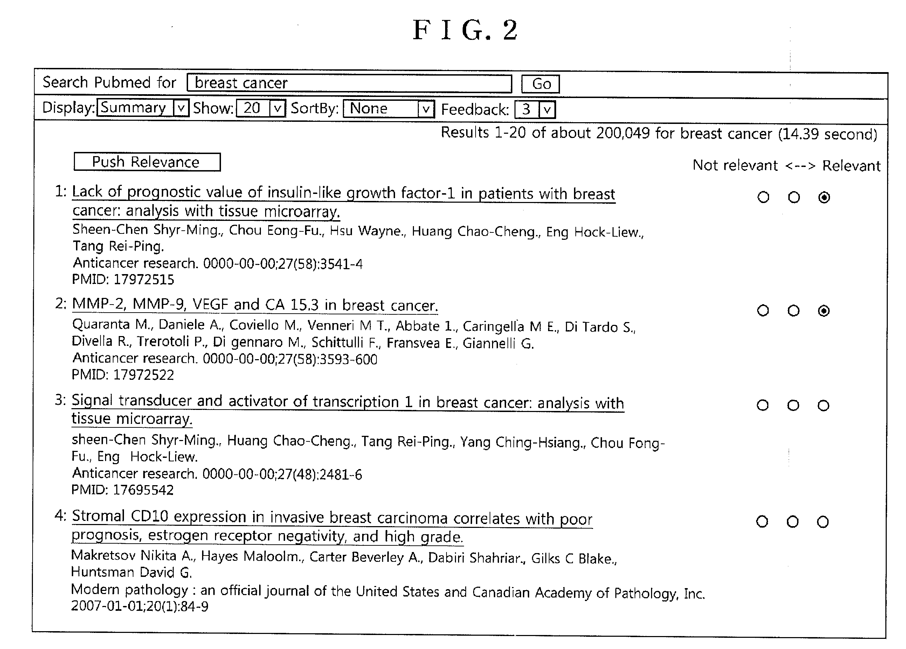

FIGS. 1 and 2 are conceptual diagrams for explaining a method of performing a database search using relevance feedback according to an example embodiment of the present invention.

In FIG. 1, a prototype of a search system RefMed is shown in which the example embodiment of the present invention is embodied for a database, PubMed (http://dm.postech.ac.kr/refmed). PubMed is a typical example of a database in which a relevance search is difficult. It is difficult to search for related articles from PubMed because PubMed provides only articles exactly matching a given query, as a search result, and does not support relevance ranking.

As shown in FIG. 1, when a user enters a query containing a keyword "breast cancer," RefMed returns an initial search result and the user may provide relevance feedback for the initial search result. As shown in the right side of FIG. 1, the user may provide feedback on whether the initial search result matches or is relevant to a desired search result, by sequentially indicating "Not Relevant," "Partially Relevant," "Highly Relevant," "Highly Relevant," and "Partially Relevant" for first five documents in the search result.

In FIG. 2, a search result ordered after a user enters relevance feedback is shown. A relevance function and a ranking scoring function are derived from the relevance feedback of the user, documents included in the initial search result are scored using the derived function, and the initial search result is re-ordered according to the score. As shown in the right of FIG. 2, the document for which the user provides the relevance feedback as "Highly Relevant" is located at a higher position in the search result.

The RefMed search system allows the user to easily represent relevance without entering a complex search query, and quickly provides a search result according to the represented relevance.

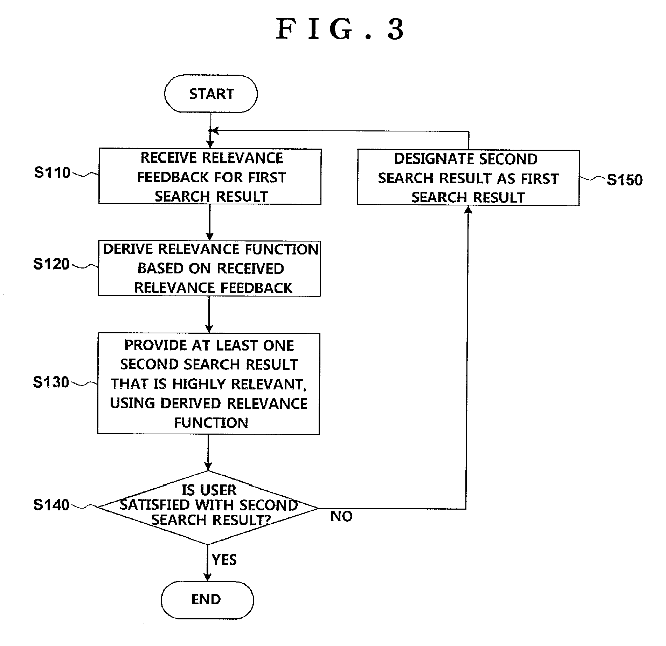

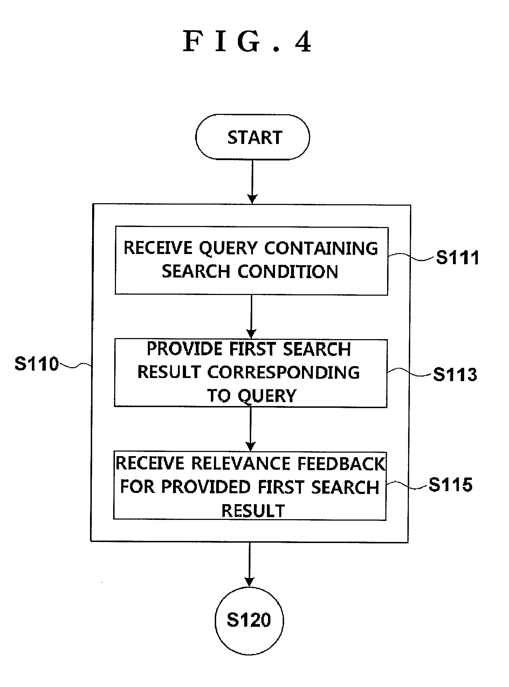

FIGS. 3 and 4 are flowcharts of a method of performing a database search using relevance feedback according to an example embodiment of the present invention.

Referring to FIG. 3, relevance feedback for a first search result is received (S 110). Specifically, as shown in FIG. 4, a query containing a search condition is received from a user (S111), and the first search result corresponding to the query is provided (S 113). Relevance feedback for the first search result may be received.

The relevance feedback may be multi-level relevance feedback for the first search result. For example, the relevance feedback is not limited to binary feedback, such as "Relevant" and "Not Relevant," but may take, for example, "Not Relevant," "Partially Relevant," and "Highly Relevant".

The relevance feedback may be relative relevance ordering feedback for the first search result. That is, the relevance feedback may take a form obtained by a user partially or entirely rearranging the first search result according to a relevance level.

Referring back to FIG. 3, a relevance function is then derived based on the received relevance feedback (S 120). In this case, a relevance function for returning a ranking score according to a relevance level of each data contained in the first search result may be derived using a ranking scheme based on the received relevance feedback. That is, the relevance function, which is a training result by the ranking scheme, can be derived by applying the relevance feedback received from the user and the search result corresponding to the relevance feedback, as training data, to the ranking scheme and performing training.

The ranking scheme is a machine training method by which training is performed to return a ranking score according to a relevance level between pieces of data. Examples of the ranking scheme include RankSVM, RankNet, RankBoost, etc., as described above.

From the perspective of the database system, deriving the relevance function (S120) may be embodied by structured query language (SQL) syntax that receives a training table containing training data as an input and outputs a model table containing trained result data. Here, the relevance function may be stored or embodied as a model table in the database.

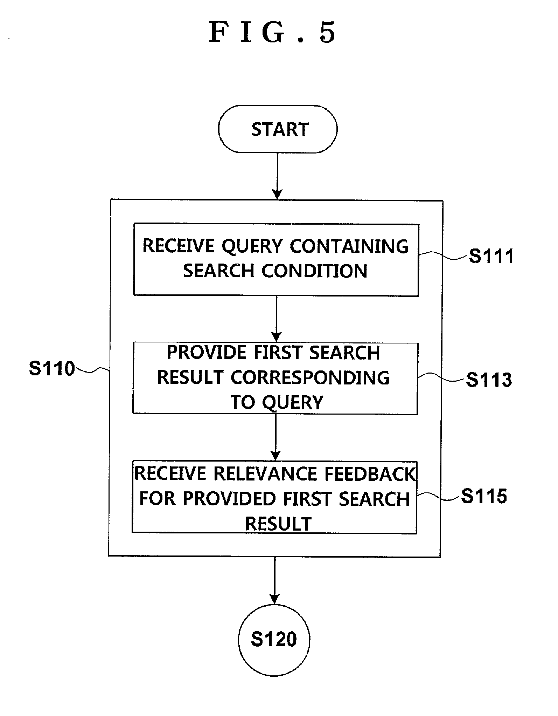

FIG. 5 illustrates tables used in the method of performing a database search using relevance feedback according to an example embodiment of the present invention.

In FIG. 5, it is assumed that each data is an instance. A training table (train_table) may include an ID having an instance identifier attribute, FVector having a feature vector attribute describing the instance, and RankGroup and Rank having a ranking label attribute of the instance. RankGroup and Rank are necessary to designate a ranking label of a specific instance in a relative relevance ordering set.

A model table may include CVal having a soft margin attribute, KType having a kernel type attribute, and KVal having a kernel attribute. For example, when a linear kernel or a RBF kernel is supported, the model table may have a value: KType = {linear, RBF}. The model table (model_table) may further include Alpha having a coefficient attribute and SVector having a support vector attribute, which are calculated in the optimization process of RankSVM described with reference to Equation 3. Since details of the coefficient and the support vector can be easily recognized from known related techniques and technical documents, a description of the details will be omitted.

Referring back to FIG. 3, at least one of deriving the relevance function (S 120) and providing the second search result (S 130), which will be described below, may be performed as a form of separate independent query language instructions or instructions integrated into an existing query language on the database system.

The fact that at least one of deriving the relevance function (S120) and providing the second search result (S130) is performed as a form of instructions integrated into an existing query language means that the ranking scheme such as RankSVM is integrated into a database management system (DBMS), and specifically, a query language such as a SQL. In this case, since training and ranking can be performed on the data table, such as the SQL data table, without additional access to a disk for generating intermediate files, a query processing speed can be improved and efficient execution can be achieved. Database functions, such as indexes and optimizers, can be used to manage and access data. Furthermore, as the ranking scheme is integrated into an existing query language, the existing query language can be used as it is for easy development and maintenance of related applications.

Next, the derived relevance function is applied to the first search result, such that a second search result ordered according to a relevance level can be provided (S130). Specifically, a result obtained by applying the relevance function or the ranking scoring function, which is a result of training by the ranking scheme (S120), to the first search result and ordering the first search result according to a relevance level or a relevance score for each document may be provided as the second search result.

From the perspective of the database system, providing the second search result (S130) may be embodied by a SQL syntax that receives a model table containing trained result data and a test table containing data for which relevance levels are to be predicted and outputs a result table corresponding to the test table.

Referring to FIG. 5, the test table may include an instance identifier attribute and a feature vector attribute describing an instance. The result table may include an instance identifier attribute and a ranking score attribute of the instance.

Referring back to FIG. 3, a determination is made as to whether the user is satisfied with the second search result, based on a search termination input from the user (S 140). When additional relevance feedback is received, the second search result is designated as the first search result (S150) and the above process is repeatedly performed.

As an example in which the ranking scheme is performed as a form of an instruction integrated into an existing query language, a case in which a RankSVM related execution syntax is embedded into SQL will now be described by way of example.

RankSVM performs a training process (RANKSVM_LEARN) and a prediction process (ranking, RANKSVM_PREDICT), as described below. RANKSVM_LEARN is executed to create a model table, as described below. The model table containing trained model information is used as an input to RANKSVM_PREDICT.

model_table = RANKSVM_LEARN train_table parameters

output_table = RANKSVM_PREDICT model_table test_table

In the process RANKSVM_LEARN, train_table and parameters are received and model_table is output. In the process RANKSVM_PREDICT, model_table and test_table are received and output_table is output. Since attributes included in train_table, model_table and test_table may be understood as described above in connection with the training table, the model table and the test table, a description of the attributes will be omitted. The parameters may be designated by the user, and include CVal having a soft margin attribute, KType having a kernel type attribute, and KVal having a kernel attribute.

SQL Backus-Naur Form (BNF), corresponding to RANKSVM_LEARN and RANKSVM_PREDICT is as follows (here, the kernel may be a linear kernel or a RBF kernel):

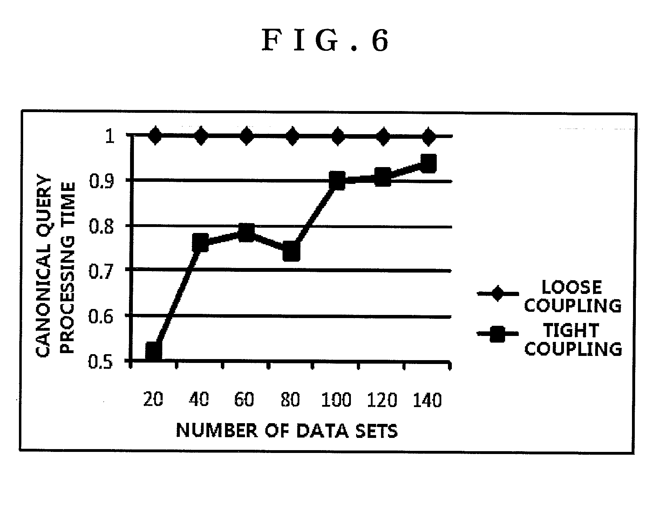

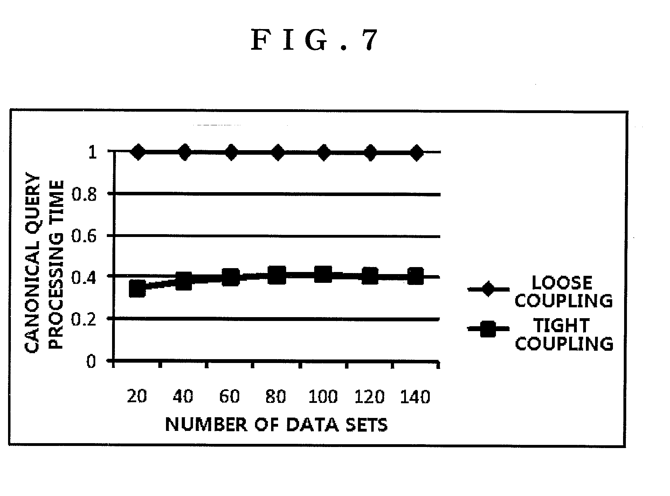

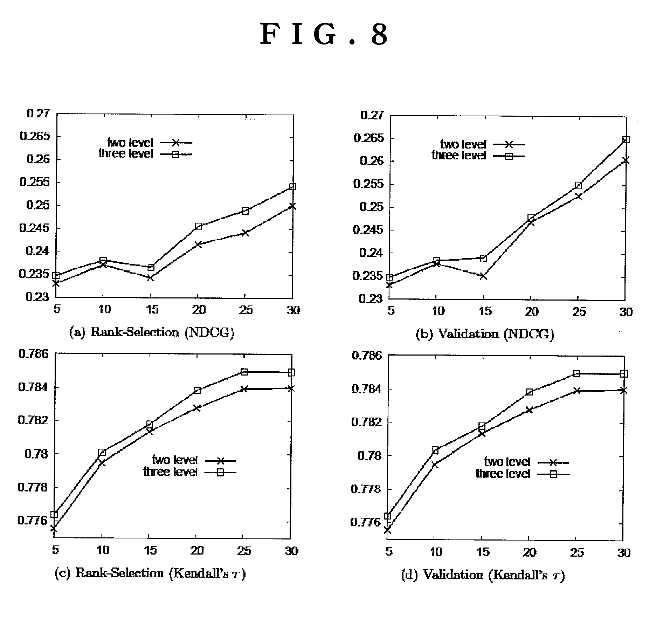

```
<query expression> ::= <non-join query expression> | <joined table> |
<ranksvm learn> | <ranksvm predict>
<ranksvm learn> ::= "RANKSVM_LEARN" <train table> <parameters>
<ranksvm predict> ::= "RANKSVM_PREDICT" <model table> <test table>
<parameters> ::= "(" <cval> "," "LINEAR" ")" | "(" <cval> "," "RBF" "," <kval>
")"
<train table> ::= <table reference>
<model table> ::= <table reference>
<test table> ::= <table reference>
<cval> ::= NUM
<kval> ::= NUM
```

Since training and prediction instructions are defined as a part of <query expression> of SQL, they may be used as a sub query of another SQL syntax. Since the training table, the model table and the test table are defined as <table reference> of SQL, a sub query may be located in an instruction sentence. An example of a SQL query for ranking data on the test table according to a function learned from the training table is as follows:

```
SELECT test_table.ID, output_table.RScore
FROM test_table, (
      RANKSVM_PREDICT (
          RANKSVM_LEARNtrain_table (LINEAR, 1)
      ) test_table
) AS output_table
WHERE test_table.ID = output_table.ID
ORDER BY output_table.RScore DESC;
```

FIG. 6 is a graph showing an efficiency experiment result in the training process of the method of performing a database search using relevance feedback according to an example embodiment of the present invention. FIG. 7 is a graph showing an efficiency experiment result in the prediction process of the method of performing a database search using relevance feedback according to an example embodiment of the present invention.

In the method of performing a database search using relevance feedback according to an example embodiment of the present invention, a result of comparing the case in which the ranking scheme is integrated into a database system (hereinafter, referred to as "tight coupling") with the case in which the training data extracted from the database table is subject to ranking training offline and a result of ranking training is stored in a database table (hereinafter, referred to as "loose coupling"), in order to evaluate the performance of the former is shown.

A synthetic data set was used in the experiment. The synthetic data set is divided into five partial rankings 0 to 4, based on a result value obtained by creating 100 features using a random function conforming to a normal distribution, creating any random score function, and applying each data to the score function. A synthetic data set containing several pieces of data was created and used in the experiment. The experiment was performed on Linux Kernel 2.6.18, MySQL 5.0.51a of a DELL server equipped with a specification of two Intel QuadCore processors, a 40G RAM, and HDD 4.5TB.

It can be seen from FIG. 6 that the tight coupling scheme exhibits a canonical query processing time in training process reduced by 40% or more for 20 data sets, and by 10% to 20% for any other number of data sets, unlike the loose coupling scheme.

It can be seen from FIG. 7 that the tight coupling scheme exhibits a canonical query processing time in the prediction (ranking) process reduced by almost 60%, unlike the loose coupling scheme. In particular, it can be seen that the tight coupling scheme exhibits excellent performance of the prediction process, unlike the loose coupling scheme.

FIG. 8 is a graph showing an accuracy experiment result of the method of performing a database search using relevance feedback according to an example embodiment of the present invention.

An experiment was performed for accuracy of multi-level relevance judgment in comparison with binary judgment. Normalized discount cumulative gain (NDCG) and Kendall's $\tau$ widely used for ranking evaluation were used as criteria of the accuracy calculation.

A synthetic data set and an OHSUMED data set were used as experiment data. The synthetic data set contains 150 pieces of data, in which each data piece has 50 features each having a random number value between 0 and 1. The accuracy was measured by comparing ranking functions before and after training.

The OHSUMED data set is a partial set of PubMed documents and consists of 348,566 documents and 106 queries. There are a total of 16,140 query-inquiry combinations subjected to the relevance judgment (feedback). The relevance judgment involves "Definitely Relevant," "Partially Relevant," and "Not Relevant".

In FIG. 8, an X axis (i.e., a horizontal axis) indicates the number of pieces of training data and a Y axis (i.e., a vertical axis) indicates accuracy measured with reference to NDCG and Kendall's $\tau$. The accuracy was calculated as an average of 30 execution results. It can be seen from FIG. 8 that the accuracy increases as the number of the training data pieces increases, and three-level judgment (three-level feedback) exhibits a more enhanced accuracy than binary judgment (binary feedback).

According to a method of performing a database search using relevance feedback and a recording medium having a program recorded thereon for executing the same, an accurate relevance function can be derived from a small amount of feedback by using multi-level feedback or relevance feedback, such as relative relevance ordering, and a ranking scheme. Thus, an efficient database search can be achieved without a user reviewing all search results to obtain a desired result.

Since a different relevance function for each user is trained from feedback of the user and ranking training and query processing are integrated into the database system, a personalized database search can be supported in real time.

Furthermore, since the ranking training scheme is integrated into a DBMS, and specifically a query language, such as a SQL, a query processing speed can be improved due to unnecessity of additional access to a disk, database functions such as indexes and optimizers can be used to manage and access the data, and existing query language can be used as it is for easy development and maintenance of related applications.

While the example embodiments of the present invention and their advantages have been described in detail, it should be understood that various changes, substitutions and alterations may be made herein without departing from the scope of the invention.

**Claims**

1. A method of performing a database search, comprising:

   receiving relevance feedback for a first search result;
   deriving a relevance function based on the received relevance feedback; and
   applying the first search result to the relevance function and providing a second search result ordered according to a relevance level.

2. The method of claim 1, wherein the receiving of the relevance feedback comprises:

   receiving a query containing a search condition;
   providing the first search result corresponding to the query; and
   receiving the relevance feedback for the first search result.

3. The method of claim 1, wherein the deriving of the relevance function comprises deriving the relevance function to return a ranking score according to a relevance level of each data included in the first search result using a ranking scheme, the ranking scheme being based on the received relevance feedback.

4. The method of claim 3, wherein the ranking scheme is one of a ranking support vector machine (RankSVM), RankNet and RankBoost.

5. The method of claim 1, wherein the deriving of the relevance function is performed as a form of a SQL syntax that uses a training table containing training data as an input factor and a model table containing trained result data as an output factor.

6. The method of claim 5, wherein the training table comprises an instance identifier attribute, a feature vector attribute describing an instance, and a ranking label attribute of the instance.

7. The method of claim 1, wherein at least one of the deriving of the relevance function and the applying of the first search result is performed as a form of separate independent query language instructions or instructions integrated into an existing query language on a database system.

8. The method of claim 1, wherein the applying of the first search result is performed as a form of a SQL syntax that uses a model table containing trained result data and a test table containing data to be predicted as input factors and a result table containing result data obtained by giving a ranking score to the data to be predicted as an output factor.

9. The method of claim 8, wherein the test table comprises an instance identifier attribute and a feature vector attribute describing an instance, and
the result table comprises the instance identifier attribute and a ranking score attribute of an instance.

10. The method of claim 1, wherein the relevance feedback is one of multi-level relevance feedback for the first search result and relative relevance ordering feedback for the first search result.

11. The method of claim 1, wherein the relevance function is stored as a table on a database system.

12. A recording medium having a program of instructions embodied tangibly, recorded thereon and executable by a digital processing apparatus performing a method of performing a database search, the recording medium being readable by the digital processing apparatus, wherein the program performs:

receiving relevance feedback for a first search result;
deriving a relevance function based on the received relevance feedback; and
applying the first search result to the relevance function and providing a second search result ordered according to a relevance level.

# FIG. 1

Search Pubmed for [breast cancer] [Go]

Display:[Summary v] Show:[20 v] SortBy:[None v] Feedback:[3 v]

Results 1-20 of about 200,049 for breast cancer (52.36 second)

[ Push Relevance ]                                          Not relevant <--> Relevant

1: Limited family structure and breast cancer risk.                    ⦿  ○  ○
Iversen Edwin s., Katki Hormuzd A., Chen Sining., Berry Donald A., Parmigani Giovanni.
JAMA : the journal of the American Medical Association. 2007-11-07;298(17):2007; auther reply 2007-8
PMID: 17986693

2: Drug-induced immune thrombocytopenia.                               ○  ⦿  ○
Cathomas Richard., Goldhirsh Aron., von Moos Roger.
The New England journal of medicine. 2007-11-01;357(18):1870-1; author reply 1871
PMID: 17985437

3: MMP-2, MMP-9, VEGF and CA 15.3 in breast cancer.                    ○  ○  ⦿
Quaranta M., Daniele A., Coviello M., Venneri M T., Abbate 1., Caringella M E., Di Tardo S.,
Divella R., Trerotoli P., Di gennaro M., Schittulli F., Fransvea E., Giannelli G.
Anticancer reserrch. 0000-00-00;27(58):3593-600
PMID: 17972522

4: Lack of prognostic value of insulin-like growth factor-1 in patients with breast    ○  ○  ⦿
cancer: analysis with tissue microarray.
Sheen-Chen Shyr-Ming., Chou Eong-Fu., Hsu Wayne., Huang Chao-Cheng., Eng Hock-Liew.,
Tang Rei-Ping.
Anticancer research. 0000-00-00;27(58):3541-4
PMID: 17972515

5: Evidence for a tumour suppressive function of IGF1-binding proteins in human    ○  [⦿]  ○
breast cancer.

# F I G. 2

| Search Pubmed for | breast cancer | | Go | |
|---|---|---|---|---|

Display: Summary [v] Show: 20 [v] SortBy: None [v] Feedback: 3 [v]

Results 1-20 of about 200,049 for breast cancer (14.39 second)

Push Relevance            Not relevant <--> Relevant

1: Lack of prognostic value of insulin-like growth factor-1 in patients with breast cancer: analysis with tissue microarray.
Sheen-Chen Shyr-Ming., Chou Eong-Fu., Hsu Wayne., Huang Chao-Cheng., Eng Hock-Liew.,
Tang Rei-Ping.
Anticancer research. 0000-00-00;27(58):3541-4
PMID: 17972515

2: MMP-2, MMP-9, VEGF and CA 15.3 in breast cancer.
Quaranta M., Daniele A., Coviello M., Venneri M T., Abbate 1., Caringella M E., Di Tardo S.,
Divella R., Trerotoli P., Di gennaro M., Schittulli F., Fransvea E., Giannelli G.
Anticancer research. 0000-00-00;27(58):3593-600
PMID: 17972522

3: Signal transducer and activator of transcription 1 in breast cancer: analysis with tissue microarray.
sheen-Chen Shyr-Ming., Huang Chao-Cheng., Tang Rei-Ping., Yang Ching-Hsiang., Chou Fong-
Fu., Eng Hock-Liew.
Anticancer research. 0000-00-00;27(48):2481-6
PMID: 17695542

4: Stromal CD10 expression in invasive breast carcinoma correlates with poor prognosis, estrogen receptor negativity, and high grade.
Makretsov Nikita A., Hayes Maloolm., Carter Beverley A., Dabiri Shahriar., Gilks C Blake.,
Huntsman David G.
Modern pathology : an official journal of the United States and Canadian Academy of Pathology, Inc.
2007-01-01;20(1):84-9

# FIG. 3

START

S110 — RECEIVE RELEVANCE FEEDBACK FOR FIRST SEARCH RESULT

S120 — DERIVE RELEVANCE FUNCTION BASED ON RECEIVED RELEVANCE FEEDBACK

S130 — PROVIDE AT LEAST ONE SECOND SEARCH RESULT THAT IS HIGHLY RELEVANT, USING DERIVED RELEVANCE FUNCTION

S140 — IS USER SATISFIED WITH SECOND SEARCH RESULT?

NO

S150 — DESIGNATE SECOND SEARCH RESULT AS FIRST SEARCH RESULT

YES

END

# F I G . 4

```
              ┌─────────┐
              │  START  │
              └─────────┘
                   │
                   ▼
   ┌───────────────────────────────────┐
   │  ┌─────────────────────────────┐  │
   │  │ RECEIVE QUERY CONTAINING    │  │──── S111
   │  │ SEARCH CONDITION            │  │
   │  └─────────────────────────────┘  │
   │                │                  │
   │                ▼                  │
   │  ┌─────────────────────────────┐  │
S110│  │ PROVIDE FIRST SEARCH        │  │
   │  │ RESULT CORRESPONDING        │  │──── S113
   │  │ TO QUERY                    │  │
   │  └─────────────────────────────┘  │
   │                │                  │
   │                ▼                  │
   │  ┌─────────────────────────────┐  │
   │  │ RECEIVE RELEVANCE FEEDBACK  │  │──── S115
   │  │ FOR PROVIDED FIRST SEARCH   │  │
   │  │ RESULT                      │  │
   │  └─────────────────────────────┘  │
   └───────────────────────────────────┘
                   │
                   ▼
              ┌─────────┐
              │  S120   │
              └─────────┘
```

# F I G . 5

```
        ┌─────────┐
        │  START  │
        └─────────┘
             │
             ▼
┌──────────────────────────────────────┐
│   ┌────────────────────────────┐      │
│   │ RECEIVE QUERY CONTAINING   │──S111│
│   │     SEARCH CONDITION       │      │
│   └────────────────────────────┘      │
│                │                       │
│                ▼                       │
│   ┌────────────────────────────┐      │
│   │   PROVIDE FIRST SEARCH     │      │
│S110│  RESULT CORRESPONDING     │──S113│
│   │         TO QUERY           │      │
│   └────────────────────────────┘      │
│                │                       │
│                ▼                       │
│   ┌────────────────────────────┐      │
│   │ RECEIVE RELEVANCE FEEDBACK │      │
│   │ FOR PROVIDED FIRST SEARCH  │──S115│
│   │          RESULT            │      │
│   └────────────────────────────┘      │
└──────────────────────────────────────┘
             │
             ▼
        ┌─────────┐
        │  S120   │
        └─────────┘
```

# F I G . 6

# F I G . 7

# F I G . 8

(a) Rank-Selection (NDCG)

(b) Validation (NDCG)

(c) Rank-Selection (Kendall's $\tau$)

(d) Validation (Kendall's $\tau$)

## EUROPEAN SEARCH REPORT

Application Number

EP 10 15 1705

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/102122 A2 (WINK TECHNOLOGIES INC [US]; LU YUNSHAN [US]; RIOS GORDON P [US]; TANNE) 28 September 2006 (2006-09-28) <br> * abstract * <br> * page 2, line 32 - page 3, line 33 * <br> * page 4, line 18 - line 27 * <br> * page 6, line 32 - page 7, line 9 * <br> * page 8, line 29 - page 9, line 18 * <br> * page 10, line 25 - line 26 * <br> * page 13, line 21 - line 30 * <br> ----- | 1-4,12 | INV. <br> G06F17/30 |
| X | US 2008/114751 A1 (CRAMER MARK [US] ET AL) 15 May 2008 (2008-05-15) <br> * abstract * <br> * paragraph [0002] * <br> * paragraph [0010] * <br> * paragraph [0013] - paragraph [0018] * <br> * paragraph [0033] - paragraph [0035] * <br> * paragraph [0041] - paragraph [0042] * <br> * paragraph [0046] - paragraph [0047] * <br> * paragraph [0057] * <br> * paragraph [0063] * <br> ----- | 1-4,12 | |
| A | YUNBO CAO ET AL: "Adapting ranking SVM to document retrieval" <br> PROCEEDINGS OF THE TWENTY-NINTH ANNUAL INTERNATIONAL ACM SIGIR CONFERENCE ON RESEARCH AND DEVELOPMENT IN INFORMATION RETRIEVAL ACM NEW YORK, NY, USA, 2006, pages 186-193, XP002596007 <br> ISBN: 1-59593-369-7 <br> * page 186 - page 187 * <br> ----- <br> -/-- | 1-12 | TECHNICAL FIELDS SEARCHED (IPC) <br><br> G06F |

The present search report has been drawn up for all claims

| Place of search | Date of completion of the search | Examiner |
|---|---|---|
| The Hague | 11 August 2010 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 10 15 1705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUANG FENG ET AL: "Hybrid learning framework for web information retrieval" NEURAL NETWORKS AND SIGNAL PROCESSING, 2008 INTERNATIONAL CONFERENCE ON, IEEE, PISCATAWAY, NJ, USA, 7 June 2008 (2008-06-07), pages 569-574, XP031298765 ISBN: 978-1-4244-2310-1 * abstract * * page 569 - page 570 * ----- | 1-12 | |

| | |
|---|---|
| | TECHNICAL FIELDS SEARCHED (IPC) |

The present search report has been drawn up for all claims

| Place of search | Date of completion of the search | Examiner |
|---|---|---|
| The Hague | 11 August 2010 | de Castro Palomares |

EPO FORM 1503 03.82 (P04C01)

**EP 2 282 274 A1**

**ANNEX TO THE EUROPEAN SEARCH REPORT
ON EUROPEAN PATENT APPLICATION NO.**                    EP 10 15 1705

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2010

| Patent document cited in search report | | Publication date | Patent family member(s) | | Publication date |
|---|---|---|---|---|---|
| WO 2006102122 | A2 | 28-09-2006 | CA | 2601768 A1 | 28-09-2006 |
| | | | CN | 101523338 A | 02-09-2009 |
| | | | EP | 1866738 A2 | 19-12-2007 |
| | | | JP | 2008538149 T | 09-10-2008 |
| | | | KR | 20080033137 A | 16-04-2008 |
| US 2008114751 | A1 | 15-05-2008 | NONE | | |

For more details about this annex : see Official Journal of the European Patent Office, No. 12/82

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090067086

**Non-patent literature cited in the description**

- **Burges, C.J.C.** A tutorial on support vector machines for pattern recognition. *Data Mining and Knowledge Discovery,* 1998, vol. 2, 121.167

- Classification by pairwise coupling. **Hastie, T. ; Tibshirani, R.** Advances in Neural Information Processing Systems. Department of Statistics, 1998, vol. 10, 1895-1924